# EUROPÄISCHE PATENTSCHRIFT

(11) **EP 2 315 644 B1**
(45) Veröffentlichungstag und Bekanntmachung des Hinweises auf die Patenterteilung: **09.04.2014**
(21) Anmeldenummer: 09777121.6
(22) Anmeldetag: 10.07.2009
(51) Int. Cl.: B23Q 15/00

(54) **VERFAHREN ZUR VERLAGERUNG DER BEARBEITUNGSSTELLE EINES WERKSTÜCKS**
METHOD FOR SHIFTING THE POINT OF MACHINING OF A WORK PIECE
PROCÉDÉ DE DÉPLACEMENT DU POINT D'USINAGE D'UNE PIÈCE

(30) Priorität: 18.07.2008 DE 102008033709
(43) Veröffentlichungstag der Anmeldung: 04.05.2011
(73) Patentinhaber: TRUMPF Werkzeugmaschinen GmbH & Co. KG, 71254 Ditzingen (DE)
(72) Erfinder: WADEHN, Wolf, 71735 Nussdorf (DE)
(74) Vertreter: Schiz, Jochen
(86) Internationale Anmeldenummer: PCT/EP2009/005041
(87) Internationale Veröffentlichungsnummer: WO 2010/006738

(56) Entgegenhaltungen:
- EP-A- 2 008 753
- EP-A1- 1 688 807
- WO-A2-2006/075209
- DE-A1- 2 936 251
- DE-A1- 19 851 781

## Beschreibung

Die Erfindung betrifft ein Verfahren zur Verlagerung der Bearbeitungsstelle eines Werkstücks, an der das Werkstück mittels eines Werkzeugs einer Werkzeugmaschine bearbeitet wird.

Es ist bekannt, bei Werkzeugmaschinen ein Werkzeug über eine oder mehrere Werkzeugachsen zu bewegen. Unter einer Werkzeugachse wird eine Anordnung einschließlich eines Antriebs verstanden, die ein Werkzeug in einer Achsrichtung bewegt. Achsrichtungen können translatorische Achsrichtungen oder auch Rotationsachsrichtungen sein. Zur Bewegung des Werkzeugs in Bezug zum Werkstück können mehrere Bewegungen in unterschiedlichen Ausrichtungen überlagert werden, das heißt das Werkzeug wird durch mehrere Achsen bewegt.

Die Bearbeitung eines Werkstücks, welches aufgrund einer vereinfachten Spanntechnik oftmals ortsfest angeordnet ist, kann in einem Arbeitsraum erfolgen, der durch die Werkzeugsachsen festgelegt wird. Der Arbeitsraum umfasst dabei alle Punkte, die durch ein Werkzeug, welches durch die Werkzeugachsen angetrieben ist, erreichbar ist. Als Werkzeug im Sinne der Erfindung wird auch ein Laserbearbeitungskopf verstanden.

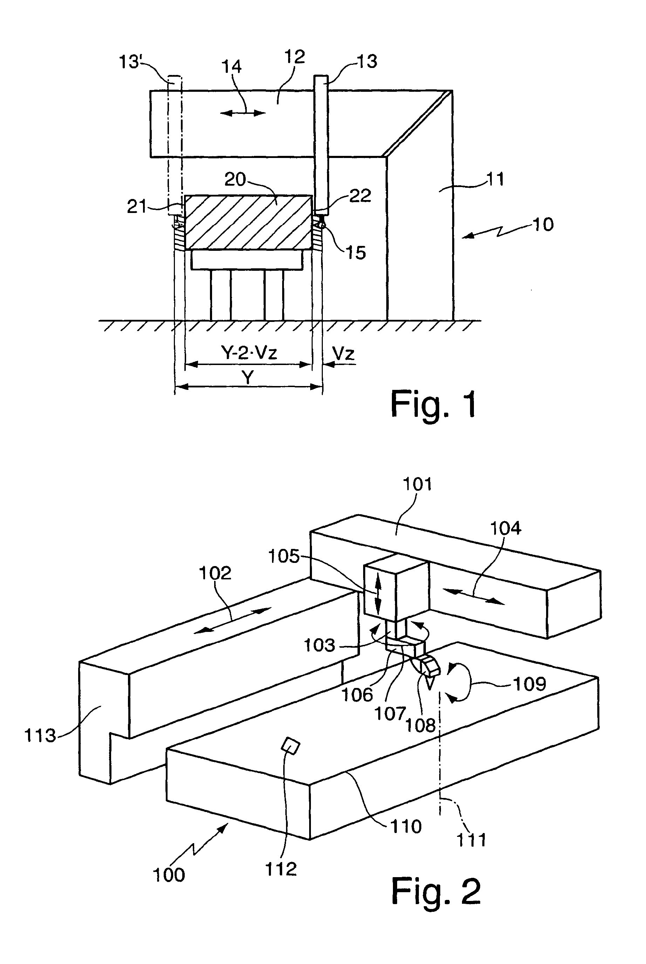

Anhand der Figur 1 soll das Vorstehende näher erläutert werden. Gezeigt ist eine Werkzeugmaschine 10, die einen Maschinenkörper 11 aufweist, an dem ein Ausleger 12 befestigt ist. Der Ausleger 12 ist senkrecht zur Zeichenebene relativ zum Maschinenkörper 11 entlang einer Achsrichtung verfahrbar. An dem Ausleger 12 ist ein Schlitten 13 angeordnet, der in Achsrichtung 14 entlang des Auslegers 12 bewegbar ist. Eine maschinenkörpemahe Endstellung ist durch die Bezugsziffer 13 markiert und eine maschinenkörperfeme Stellung ist durch die Bezugsziffer 13' dargestellt. An dem Schlitten 13 befindet sich ein Werkzeug 15 in Form eines Laserbearbeitungskopfes, der wiederum rotierbar angeordnet ist. In dem Bereich 20 kann das Werkzeug 15 an jedem Raumpunkt jede beliebige Orientierung einnehmen. In den Randbereichen 21, 22 sind jedoch nur bestimmte Orientierungen einstellbar. Der vollständig nutzbare beziehungsweise voll orientierbare Arbeitsraum ist somit nur der Bereich 20. Dieser Bereich ist somit deutlich kleiner als der Bereich maximaler Verfahrbarkeit (y in y-Richtung) der translatorischen Werkzeugachsen. Der Grund hierfür liegt in der Geometrie des Werkzeugs 15. Der tatsächliche Arbeitsraum in y-Richtung ist somit y_{eff} = y - 2 • Vz.

Der Arbeitsraum ist ein wesentliches Merkmal einer Werkzeugmaschine. Eine Vergrößerung des Arbeitsraums über eine Verlängerung der Achsen, beispielsweise durch eine Verlängerung des Auslegers 12, hat jedoch viele Nachteile, wie zum Beispiel höhere zu bewegende Massen, niedrigere Steifigkeiten und geringere Dynamik.

Weiterhin ist zu beachten, dass je weiter der Schlitten 13 in Richtung der Position 13' bewegt wird, desto größer sind die Schwingungen, die auftreten, da sich das Werkzeug 15 in einer maschinenkörperfernen Position befindet. Außerdem wirken am freien Ende des Auslegers 12 größere Hebelkräfte. Bessere Bearbeitungsergebnisse, insbesondere mit höherer Genauigkeit, werden bei einem Werkzeugeingriffspunkt in der Nähe des Maschinenkörpers 11 erreicht.

Es sind im Stand der Technik Systeme bekannt, bei denen das Werkstück mit konstanter Bewegung in/durch den Arbeitsraum geführt wird (z.B. Coilbearbeitung) und die Werkzeugachsen eine überlagerte Bewegung ausführen, um diese zeitparallel zur Zuführbewegung überlagert zu bearbeiten.

Aus der DE 198 51 781 A1 ist eine Werkzeugmaschine bekannt, die eine hochdynamische Zusatzachse aufweist, so dass Dynamikfehler korrigiert werden können.

Aus der DE 29 36 251 A1 ist eine Maschine zum Bearbeiten von Kurbelwellen bekannt. Dabei ist eine Kurbelwelle eingespannt und wird während ihrer Bearbeitung bewegt. Weiterhin ist ein Schlitten vorgesehen, an dem ein Fräswerkzeug angeordnet ist.

Die EP 2 008 753 A1 offenbart eine Werkzeugmaschine, die in unterschiedlichen Bearbeitungsmodi betrieben werden kann. Ein erster Bearbeitungsmodus sieht vor, dass während der Werkstückbearbeitung ein Laserkopf und das Werkstück gleichzeitig relativ zueinander bewegt werden.

Aus der WO 2006/075209 A2 ist eine Laserbearbeitungsmaschine bekannt, die in einer Ausführungsform ein feststehendes Portal aufweist, entlang dem ein Schlitten bewegbar ist, an dem ein Laserbearbeitungskopf angeordnet ist. Ein Werkstück kann während der Bearbeitung relativ zum Bearbeitungskopf bewegt werden.

Die EP 1 688 807 A1 offenbart ein Verfahren zur Bewegungsaufteilung einer Relativbewegung zwischen einem Werkstück und einem Werkzeug einer Werkzeugmaschine in Richtung einer Achse auf zumindest einen ersten Bewegungsanteil und einen zweiten Bewegungsanteil, bei dem eine Sollgröße für die Gesamtbewegung vorgegeben wird und eine Regelung des ersten Bewegungsanteils in einer ersten Achsregelung und eine Regelung des zweiten Bewegungsanteils in einer zweiten Achsregelung erfolgt, wobei eine Größe der ersten Achsregelung der zweiten Achsregelung zugeführt wird.

Aufgabe der vorliegendendärflndung ist es, ein Verfahren bereitzustellen, das einen größeren bearbeitbaren Bereich eines Werkstücks und/oder eine präzisere Bearbeitung eines Werkstücks erlaubt.

Gelöst wird diese Aufgabe durch ein Verfahren mit den Merkmalen des Anspruchs 1.

Bei dem erfindungsgemäßen Verfahren wird die dynamische Bearbeitung des Werkstücks weiterhin über die Werkzeugachsen durchgeführt. Zusätzlich wird jedoch der

Werkzeugachse beziehungsweise den Werkzeugachsen und/oder einer eventuellen Werkstückachse eine Zusatzbewegung durch eine (redundante) Werkstückachse überlagert, um den tatsächlichen Arbeitsraum zu vergrößern, also einen Arbeitsbereich zu schaffen, der nicht allein durch die Werkzeugachsen bestimmt wird, und/oder die Bearbeitungsstelle in einen dynamisch günstigeren Punkt des Arbeitsraumes zu führen. Somit ist es zum einen möglich, Stellen des Werkstücks zu bearbeiten, die vorher außerhalb des (voll orientierbaren) Arbeitsraumes lagen. Außerdem ist es möglich, die Bearbeitungsstelle in einen maschinenkörpernahen Bereich zu verlagern, wo weniger Schwingungen auftreten, sodass ein dynamisch günstigerer Arbeitspunkt erreicht wird und eine präzisere Werkstückbearbeitung durchgeführt werden kann. Insbesondere kann der Arbeitsraum der Maschine vergrößert werden, ohne dass die Bearbeitung des Werkstücks unterbrochen werden muss. Die Zuordnung zwischen Werkstück und Werkzeug kann in der Art geändert werden, dass die Bearbeitungsstelle durch die Redundanz der Achsen stets so gelegt wird, dass sich diese in einem Bereich mit möglichst hoher Maschinendynamik befindet. Die erfindungsgemäße Lösung unterscheidet sich von Anwendungen, wie z.B. der Coilbearbeitung, dadurch, dass die Werkstückachse keine von den Werkzeugachsen unabhängige konstante (Zuführ-)Bewegung ausführt, sondern vollinterpolierend in die Bewegungserzeugung der Relativbewegung zwischen Werkstück und Werkzeug eingebunden ist. Die redundante Werkstückachse ist eine Achse, die für die Werkstückbearbeitung im herkömmlichen Arbeitsraum nicht benötigt wird bzw. vorhanden ist. Die redundante Werkstückachse oder eine zusätzliche Werkstückachse kann zur Bewegung des Werkstücks außerhalb der Werkstückbearbeitung eingesetzt werden. Eine Werkstückbearbeitung findet im Sinne der Erfindung nur statt, wenn ein Laserstrahl auf das Werkstück trifft. Wird das Werkstück nachgesetzt, um es an einer weiteren Stelle zu bearbeiten, so stellt dieses Nachsetzen keine Werkstückbearbeitung dar. Im Normalbetrieb, d.h., wenn keine Arbeitsbereichserweiterung erfolgt oder die Bearbeitungsstelle nicht zum Maschinenkörper verlagert werden soll, wird die redundante Werkstückachse nicht bewegt. Zur Verlagerung der Bearbeitungsstelle mit dem Ziel einer effektiven Erweiterung des Arbeitsraums oder einer Verlagerung zum Maschinenkörper hin, wird die redundante Werkstückachse nur gleichzeitig mit den Werkzeugachsen bewegt.

Ein weiterer vorteilhafter Aspekt der frei wählbaren Lage des Bearbeitungspunktes im Arbeitsraum liegt in der Möglichkeit die Absaugung der Bearbeitungsverschmutzungen zu optimieren. Um Verschmutzungen einer Fabrikhalle zu reduzieren, weisen Werkzeugmaschinen häufig Kabinen mit einer Tür zum Be- und Entladen von Werkstücken auf. Schmutz wird aus der Kabine abgesaugt. Ein weiterer Vorteil der Erfindung besteht darin, dass die Bearbeitungsstelle in einen Bereich verlegt werden kann, wo eine hohe Absaugleistung vorhanden ist. Dadurch kann die Luftverunreinigung in einem Beladebereich der Werkzeugmaschine gering gehalten werden. Bearbeitungsstellen nahe der Beladetür können vermieden werden. Daraus resultiert ein geringerer Schmutzaustritt aus der Kabine bei geöffneter Tür.

Gemäß der Erfindung ist vorgesehen dass eine Relativbewegung zwischen Werkstück und Werkzeug aufgeteilt wird auf einen durch die zumindest eine Werkzeugachse durchzuführenden Verfahrweg und einen durch den Werkstückachse durchzuführenden Verfahrweg, wobei die im Vergleich zur Werkstückachse höherdynamische Werkzeugachse den größeren Verfahrweg durchführt. Dadurch kann die Bewegung der Werkstückauflage sehr niederdynamisch gehalten werden, sodass sich das Werkstück auf der Werkstückauflage nicht verschiebt. Es handelt sich erfindungsgemäß also um eine andere Achsaufteilung als bei redundanten Zusatzachsen, die verwendet werden, um eine Dynamik einer Achse zu erhöhen. Bei diesen aus dem Stand der Technik bekannten Konzepten werden hochfrequente Bewegungsanteile auf die hochdynamische Zusatzachse gelegt. Bei der erfindungsgemäßen Lösung handelt es sich jedoch nicht primär um eine Bewegungsaufteilung sondern um ein Verfahren, bei dem die dynamische Bearbeitung weiterhin über die Hauptachsen durchgeführt wird, die höherdynamisch sind als die niederdynamische redundante Werkstückzusatzachse.

Dabei kann die Aufteilung der Dynamik der Relativbewegung auf Werkzeugachse und Werkstückachse in Abhängigkeit der Arbeitsraumposition oder der Bearbeitungsaufgabe variiert werden.

Die einfachste Variante dieser Aufteilung der Relativbewegung auf Werkzeugachse und Werkstückachse erfolgt nach einem vorgegebenen, insbesondere konstanten Verhältnis. Im Verhältnis der Aufteilung der Relativbewegung wird auch das Verhältnis der Dynamiken der Werkzeugachsen und der Werkstückzusatzachse gewählt. Wenn beispielsweise ein Drittel der Bewegung durch die Werkstückachse und zwei Drittel einer Bewegung durch die Werkzeugachsen durchgeführt werden, weist auch die Werkstückachse nur ein Drittel der Dynamik der Werkzeugachsen auf. Kompliziertere Verfahren teilen die Bewegungen entsprechen ihrer Frequenzanteile auf Werkstück und Werkeugachse auf.

Besondere Vorteile ergeben sich, wenn eine interpolierende Arbeitspunkteinstellung beziehungsweise Verlagerung der Bearbeitungsstelle durch Überlagerung der Werkzeugachsbewegungen und der Werkstückachsbewegung erfolgt. Bei großen Werkstücken, welche den translatorischen Achsverfahrbereich der Maschine überschreiten, wird die redundante Werkstückachse mit sehr niederfrequenten Bewegungen beaufschlagt, um einen unterbrechungsfreien Beschnitt zu gewährleisten. Dabei wird das Werkstück nur mit minimaler Schwingungsanregung bewegt. Während es im Stand der Technik bekannt ist, zur Vergrößerung des Arbeitsbereichs die Bearbeitung zu unterbrechen und das Werkstück zu verlagern und dann erneut mit der Bearbeitung zu beginnen, kann erfindungsgemäß die Werkstückbearbeitung auch bei Vergrößerung des Arbeitsbereichs kontinuierlich erfolgen. Somit können Unstetigkeiten, die entstehen, wenn die Werkstückbearbeitung unterbrochen und dann fortgesetzt wird, vermieden werden. Die gleichen Vorteile ergeben sich, wenn die Bearbeitungsstelle während der Bearbeitung in einen maschinenkörpernahen Bereich gebracht wird oder dahin verlagert wird. Ein maschinenkörpernaher Bereich ist beispielsweise ein Bereich, der in der ersten Hälfte der Erstreckung eines Auslegers liegt.

Weitere Vorteile ergeben sich, wenn das Werkstück nicht linear verfahren wird, sondern auf einer rotierenden Werkstückauflage angeordnet wird und über die rotierende Werkstückauflage die Verlagerung der Bearbeitungsstelle erfolgt. Dadurch kann die Bearbeitungsstelle stets in Richtung Maschinenkörper gedreht werden und es entstehen geringere Beschleunigungskräfte auf das Werkstück.

Eine Arbeitsbereichserweiterung ergibt sich außerdem, wenn das Werkstück auf einer linear parallel zu einem Ausleger einer Werkzeugmaschine bewegbaren Werk stückauflage angeordnet wird und über die linear verfahrbare Werkstückauflage die Verlagerung der Bearbeitungsstelle erfolgt.

In den Rahmen der Erfindung fällt außerdem eine Werkzeugmaschine, insbesondere eine Laserbearbeitungsmaschine, mit den Merkmalen des Anspruchs 8, wobei durch die Werkzeugachsen ein voll orientierbarer Arbeitsraum festgelegt wird, und durch die insbesondere redundante Werkstückachse eine Bearbeitungsstelle in den oder im Arbeitsraum bewegbar ist. Der tatsächliche Arbeitsraum beziehungsweise Arbeitsbereich kann dadurch erweitert werden, da auch Bereiche des Werkstücks bearbeitet werden können, die außerhalb des durch die Werkzeugachsen festgelegten Arbeitsraumes gelegen sind. Das Werkstück kann über die Werkstückachse in den durch die Werkzeugachsen festgelegten Arbeitsraum bewegt werden. Hierbei führt die Werkstückachse keine konstante Zuführbewegung durch. Die Bewegung der Werkstückachse ist von der Geometrie (der Bearbeitungsaufgabe) abhängig.

Besondere Vorteile ergeben sich, wenn die Werkstückachse eine Rotationsachse ist. Dadurch kann zum einen eine Bearbeitungsstelle eines Werkstücks besonders einfach in den durch die Werkstückachsen festgelegten Arbeitsraum bewegt werden. Außerdem kann die Bearbeitungsstelle besonders einfach in einen maschinenkörpernahen Bereich bewegt werden. Vorzugsweise kann die Rotationsachse als frei orientierbare, durchdrehende niederdynamische Werkstückachse ausgebildet sein. Für eine rotierende Werkzeugachse besteht die Möglichkeit, diese mit erheblichem konstruktivem Aufwand durchdrehend auszugestalten. Alternativ kann die Werkzeugachse nicht durchdrehend ausgestaltet werden, mit dem Nachteil, dass die Positionierbarkeit des Werkstücks eingeschränkt ist. Dieser Nachteil kann mit einer Rotationsachse als Werkstückachse vermieden werden. Um die Genauigkeit zu erhöhen kann vorgesehen sein, dass am Umfang der Werkstückauflage ein Messsystem vorgesehen ist.

Durch die Möglichkeit der freien Orientierungswahl mit Hilfe der redundanten Werkstückachse können auch Effekte wie eine gezielte Lenkung beziehungsweise Orientierung der Streustrahlung eines Lasers angewendet werden. Somit kann beispielsweise erreicht werden, dass Schnitte gegen die Scheibe einer Kabine vermieden werden beziehungsweise in Richtung einer Absaugung geschnitten wird.

Weitere Vorteile ergeben sich, wenn die Werkstückachse parallel zur Richtung eines Auslegers oder einer Brücke der Werkzeugmaschine verläuft. Dadurch können auch Randbereiche eines Werkstücks bearbeitet werden, die mit herkömmlichen Maschinen nicht bearbeitet werden konnten.

Besonders vorteilhaft ist es, wenn die Werkstückachse nachrüstbar ist. Dadurch können auch bestehende Maschinen mit einer zusätzlichen Funktionalität ausgestattet werden.

Besondere Vorteile ergeben sich, wenn eine fliegende Optik vorgesehen ist. Dadurch sind hochdynamische Werkzeugbewegungen möglich.

Ein weiterer Vorteil der Anordnung ist, dass der interpolierende Betrieb der Werkstückachse nur dann genutzt werden muss, wenn es die Werkstückabmessungen erfordern. Bei Werkstücken, welche dem normalen Arbeitsraum der Werkzeugachsen entsprechen (in diesem bearbeitet werden können), kann die Originaldynamik (Nachsetzbetrieb) der Hauptachsen der Verfahrbewegungen genutzt werden.

Weitere Vorteile und Merkmale der Erfindung ergeben sich aus der Beschreibung und den Figuren der Zeichnung. Ebenso können die vorstehenden und die noch weiter aufgeführten Merkmale erfindungsgemäß jeweils einzeln oder in beliebigen Kombinationen miteinander verwendet werden. Die in den Figuren gezeigten Merkmale sind rein schematisch und nicht maßstäblich zu verstehen.

Es zeigen:
- Fig. 1: eine Ansicht einer Werkzeugmaschine zur Verdeutlichung des Problems eines reduzierten Arbeitsraumes;
- Fig. 2: eine perspektivische Darstellung einer Werkzeugmaschine mit rotierbarer Werkstückauflage;
- Fig. 3: eine Seitenansicht einer Werkzeugmaschine mit drehbarer Werkstückauflage;
- Fig.4: eine Draufsicht auf die Werkstückauflage einer Werkzeugmaschine mit drehbarer Werkstückauflage;
- Fig.5: eine perspektivische Ansicht einer Werkzeugmaschine mit in Richtung eines Auslegers bewegbarer Werkstückauflage;
- Fig.6: eine Werkzeugmaschine mit einer Brücke und in Brückenrichtung verstellbarer Werkstückauflage.

In der Figur 2 ist eine Werkzeugmaschine 100 gezeigt, bei der ein Ausleger 101 entlang der Achsrichtung 102 bewegbar ist. Entlang dem Ausleger 101 ist eine Einrichtung 103 in Achsrichtung 104 bewegbar. Die Einrichtung 103 ist zusätzlich in Achsrichtung 105 bewegbar. Durch die Achsrichtungen 102, 104, 105 werden die x-, y-, z-Richtung eines kartesischen Koordinatensystems festgelegt. Ein Teil 106 ist in Achsrichtung 107 rotierbar. An dem Teil 106 ist ein als Laserschneidkopf ausgebildetes Werkzeug 108 angeordnet, weiches wiederum in Achsrichtung 109 rotierbar ist. Anordnungen, die eine Bewegung in eine der Achsrichtungen 102, 104, 105, 107 oder 109 bewirken, stellen die Werkzeugachsen dar und sorgen für eine Bewegung des Werkzeugs 108 in Bezug zur Werkstückauflage 110. Die Werkstückauflage 110 ist um eine Rotationsachse 111 drehbar angeordnet. Insbesondere kann die Werkstückauflage 110 durchdrehend angeordnet sein. Die Anordnung, die eine Drehung der Werkstückauflage 110 um die Rotationsachse 111 bewirkt, wird als Werkstückachse bezeichnet. Durch eine Drehung der Werkstückauflage 110 kann eine Bearbeitungsstelle 112 in den durch die Werkzeugachsen definierten Arbeitsraum bewegt werden. Außerdem kann eine Bearbeitungsstelle 112 in der Nähe des Maschinenkörpers 113 angeordnet werden und/oder dort gehalten werden, so dass bei geringen Hebelwirkungen und Vibrationen eine Werkstückbearbeitung stattfinden kann.

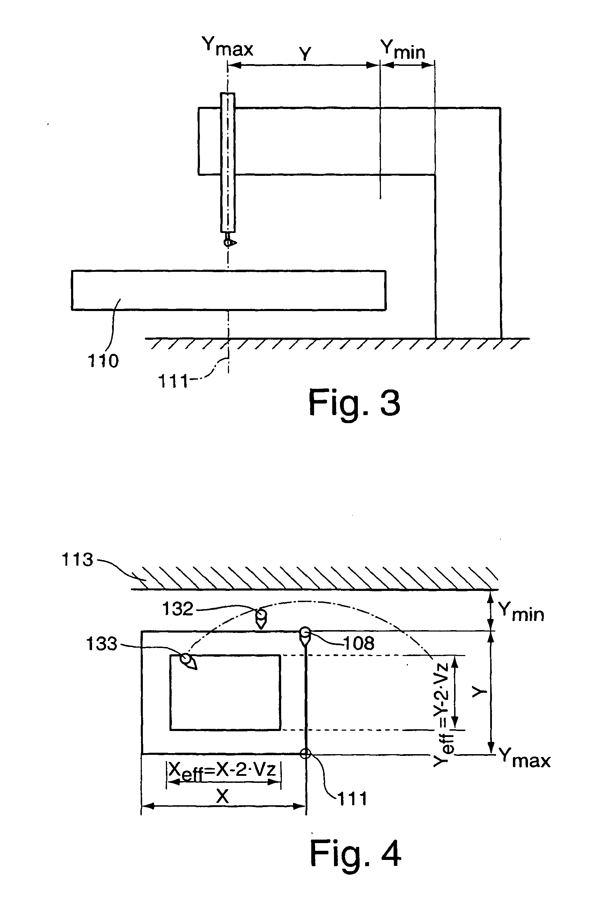

Aus der Darstellung der Figur 3 ist ersichtlich, dass die Rotationsachse 111 im Bereich der vorderen Achsgrenze yₘₐₓ, also der Stelle, bis zu der die Einrichtung 103 maximal Verfahren werden kann, angeordnet ist. Dies bedeutet, dass zumindest die Hälfte der Werkstückauflage 110 im durch die Werkzeugachsen festgelegten Arbeitsraum angeordnet ist. Dies kann beispielsweise dazu verwendet werden, dass das Werkstück, welches in einem Bereich der Werkstückauflage aufliegt, und das im Arbeitsraum angeordnet ist, bearbeitet wird und auf den anderen Bereich der Werkstückauflage 110 bereits das nächste Werkstück aufgebracht werden kann.

Der konventionell erreichbare, voll orientierbare Arbeitsraum y_{eff} ● x_{eff} (siehe Fig. 4) ist durch die Werkzeugstellung des Werkzeugs 108 und durch die Werkzeugsachsen gegeben. Dieser ist kleiner als der nur durch die Werkzeugachsen definierte Arbeitsraum, der durch die Maße x ● y angegeben ist. Wird eine Bearbeitung an der Stelle 132 notwenig, wird das Werkstück um die Rotationsachse 111 bis in die Position 133 gedreht, welche im voll orientierbaren beziehungsweise konventionell erreichbaren Arbeitsraum y_{eff} ● x_{eff} liegt. Der Arbeitsbereich, das heißt der Bereich, in dem eine Werkstückbearbeitung mit voll orientierbarem Werkzeug durchgeführt werden kann, ist somit nur durch die doppelte Länge des Achsverfahrbereichs in x-Richtung und durch den Abstand der vorderen Achslage yₘₐₓ = y + yₘᵢₙ zum Maschinenkörper begrenzt. Bei günstiger Wahl der geometrischen Abmaße (Drehpunkt der Werkstückachse wird auf Ymax gelegt) entsteht nun überproportionaler Arbeitsraumzugewinn, da der nicht vollorientierbare Bereich durch eine Drehung der Werkstückachse stets so positioniert werden kann, dass dieser mit jeder beliebigen Orientierung bearbeitet werden kann. Es versteht sich, dass für eine Bearbeitung an der Stelle 133 auch das Werkzeug 108 an diese Stelle nachgeführt werden muss. Dabei erfolgen Werkstückund Werkzeugbewegung gleichzeitig.

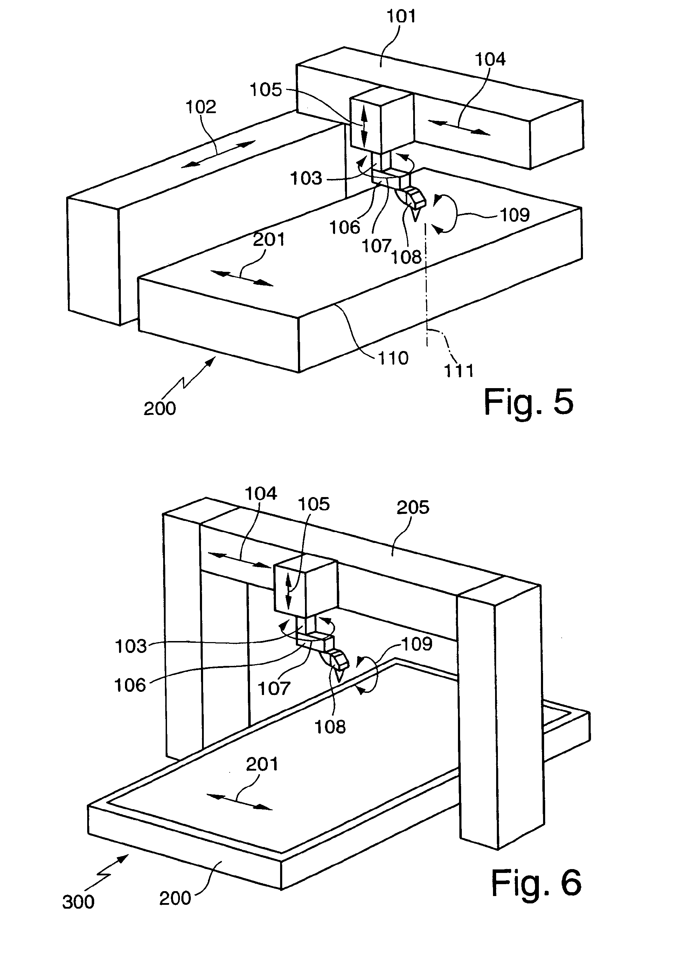

Bei der Ausführungsform gemäß Figur 5 ist die Werkstückauflage 200 in Achsrichtung 201 bewegbar, also parallel zur Achsrichtung 104 beziehungsweise parallel zur Ausrichtung des Auslegers 101. Die Anordnung, die eine Bewegung in Achsrichtung 201 bewirkt, wird als Werkstückachse bezeichnet. Dadurch ist es möglich, Randbereiche eines Werkstücks, das auf der Werkstückauflage 200 aufliegt, die bei einer herkömmlichen Maschine in Bereich V_{z} liegen (siehe Fig. 1), in den Bereich y_{eff} ● x_{eff} zu verfahren, sodass sie voll orientiert bearbeitet werden können. Durch die redundante Zusatzachse, nämlich die Werkstückachse, wird somit ein Stück des konventionell nicht voll orientierbaren Arbeitsraums, der also bisher bei herkömmlicher Ausführung von Werkszeugmaschinen nicht voll nutzbar war, da nicht jegliche Orientierung des Werkzeugs einstellbar war, voll nutzbar gemacht. Der Arbeitsbereich wird somit vergrößert.

Der Unterschied der Werkzeugmaschine 300 gemäß Figur 6 zur Werkzeugmaschine der Figur 5 besteht im Wesentlichen darin, dass anstatt eines Auslegers 101 eine Brücke 205 beziehungsweise ein Portal verwendet wird.

## Patentansprüche

1. Verfahren zur Verlagerung der Bearbeitungsstelle (112) eines Werkstücks, an der das Werkstück mittels eines Werkzeugs (108) einer Werkzeugmaschine (100, 300) bearbeitet wird, wobei
a. das Werkzeug (108) mittels zumindest einer Werkzeugachse bewegt wird, wobei das Werkzeug (108) mit einer Werkzeugachse in einer Achsrichtung (109) rotierbar ist;
b. das Werkstück mittels einer redundanten Werkstückachse während der Werkstückbearbeitung derart bewegt wird, dass
i. die Bearbeitungsstelle (112) in einen voll orientierbaren Arbeitsraum (y_{eff} ● x_{eff}) des Werkzeugs (108) gelangt oder in diesem verbleibt, wobei der voll orientierbare Arbeitsraum der Bereich (20) ist, in dem das Werkzeug (108) an jedem Raumpunkt jede beliebige Orientierung annehmen kann
und/oder
ii. die Bearbeitungsstelle (112) in einen maschinenkörpernahen Bereich gelangt;
c. durch die Werkzeugachse(n) eine höherdynamische Bewegung durchgeführt wird als durch die Werkstückachse;
d. eine Relativbewegung zwischen Werkstück und Werkzeug (108) aufgeteilt wird auf einen durch die zumindest eine Werkzeugachse durchzuführenden Verfahrweg und einen durch die Werkstückachse durchzuführenden Verfahrweg, wobei die im Vergleich zur Werkstückachse höher dynamische Werkzeugachse den größeren Verfahrweg durchführt.

2. Verfahren nach Anspruch 1, **dadurch gekennzeichnet dass**, die Aufteilung der Dynamik der Relativbewegung auf Werkzeugachse und Werkstückach-se in Abhängigkeit der Arbeitsraumposition oder der Bearbeitungsaufgabe variiert wird.

3. Verfahren nach Anspruch 1, **dadurch gekennzeichnet, dass** eine Aufteilung der Relativbewegung auf Werkzeugachse und Werkstückachse nach einem vorgegebenen, insbesondere konstanten, Verhältnis erfolgt.

4. Verfahren nach einem der vorhergehenden Ansprüche, **dadurch gekennzeichnet, dass** eine interpolierende Arbeitspunkteinstellung erfolgt durch Überlagerung der Werkzeugachsbewegung und der Werkstückachsbewegung.

5. Verfahren nach einem der vorhergehenden Ansprüche, **dadurch gekennzeichnet, dass** das Werkstück auf einer rotierenden Werkstückauflage (110) angeordnet wird und über die rotierende Werkstückauflage (110) die Verlagerung der Bearbeitungsstelle (112) erfolgt.

6. Verfahren nach einem der vorhergehenden Ansprüche, **dadurch gekennzeichnet, dass** das Werkstück auf einer linear parallel zu einem Ausleger (101) einer Werkzeugmaschine (100) verfahrbaren Werkstückauflage (200) angeordnet wird und über die linear verfahrbare Werkstückauflage (200) die Verlagerung der Bearbeitungsstelle erfolgt.

## Claims

1. Method for shifting the point of machining (112) of a workpiece, at which point the workpiece is machined by means of a tool (108) of a machine tool (100, 300), wherein
a. the tool (108) is moved by means of at least one tool axis, the tool (108) being rotatable by a tool axis in an axis direction (109);
b. the workpiece is moved by means of a redundant workpiece axis during the machining of the workpiece in such a manner that
i. the point of machining (112) arrives at or remains in a fully orientable working space (y_{eff} ● x_{eff}) of the tool (108), the fully orientable working space being the region (20), in which the tool (108) can assume any desired orientation at any point in the space,
and/or
ii. the point of machining (112) arrives at a region close to the machine frame;
c. a higher-dynamics movement is carried out by the tool axis(axes) than by the workpiece axis;
d. a relative movement between the workpiece and the tool (108) is divided into a travel distance to be carried out by the at least one tool axis and a travel distance to be carried out by the workpiece axis, the tool axis, which is higher-dynamics compared to the workpiece axis, carrying out the greater travel distance.

2. Method according to claim 1, **characterised in that** the division of the dynamics of the relative movement between the tool axis and the workpiece axis is varied in dependence on the position in the working space or on the machining task.

3. Method according to claim 1, **characterised in that** a division of the relative movement between the tool axis and the workpiece axis is carried out according to a specified, in particular constant, ratio.

4. Method according to any one of the preceding claims, **characterised in that** an interpolating working point adjustment is carried out by superimposing the tool axis movement and the workpiece axis movement.

5. Method according to any one of the preceding claims, **characterised in that** the workpiece is arranged on a rotating workpiece support (110), and the shifting of the point of machining (112) is effected via the rotating workpiece support (110).

6. Method according to any one of the preceding claims, **characterised in that** the workpiece is arranged on a workpiece support (200) which is displaceable linearly parallel to an arm (101) of a machine tool (100), and the shifting of the point of machining is effected via the linearly displaceable workpiece support (200).

## Revendications

1. Procédé de déplacement de la zone (112) d'usinage d'une pièce, dans laquelle ladite pièce est usinée au moyen d'un outil (108) d'une machine-outil (100, 300), dans lequel
a. un mouvement est imprimé à l'outil (108) à l'aide d'au moins un axe de l'outil, ledit outil (108) pouvant tourner par un axe de l'outil dans une direction axiale (109) ;
b. la pièce est mue au moyen d'un axe de la pièce redondant, au cours de l'usinage de ladite pièce, de façon telle que
i. la zone d'usinage (112) parvienne dans un espace de travail intégralement orientable (y_{eff} ● x_{eff}) de l'outil (108), ou demeure dans ledit espace, ledit espace de travail intégralement orientable étant la région (20) dans laquelle ledit outil (108) peut prendre n'importe quelle orientation souhaitée en tout point de l'espace
et/ou
ii. ladite zone d'usinage (112) parvienne dans une région proche du corps de la machine ;
c. l'axe ou les axes de l'outil effectue(nt) un mouvement plus fortement dynamique que celui effectué par l'axe de la pièce ;
d. un mouvement relatif, s'opérant entre ladite pièce et ledit outil (108), est scindé en une course devant être parcourue par ledit au moins un axe de l'outil, et en une course devant être parcourue par l'axe de la pièce, sachant que l'axe de l'outil, de dynamique plus élevée comparativement à celle de l'axe de ladite pièce, parcourt la course supérieure.

2. Procédé selon la revendication 1, **caractérisé par le fait que** le clivage de la dynamique du mouvement relatif, entre l'axe de l'outil et l'axe de la pièce, est modifié en fonction de l'emplacement de l'espace de travail, ou de la tâche d'usinage.

3. Procédé selon la revendication 1, **caractérisé par le fait qu'**un clivage du mouvement relatif entre l'axe de l'outil et l'axe de la pièce a lieu suivant un rapport préétabli, notamment constant.

4. Procédé selon l'une des revendications précédentes, **caractérisé par le fait qu'**un réglage du point de travail, à effet d'interpolation, s'opère par superposition du mouvement de l'axe de l'outil et du mouvement de l'axe de la pièce.

5. Procédé selon l'une des revendications précédentes, **caractérisé par le fait que** la pièce est mise en place sur un support rotatif (110), et le déplacement de la zone d'usinage (112) s'opère par l'intermédiaire dudit support rotatif (110) de ladite pièce.

6. Procédé selon l'une des revendications précédentes, **caractérisé par le fait que** la pièce est mise en place sur un support (200) doué de mobilité linéaire parallèlement à une console (101) en débord sur une machine-outil (100), et le déplacement de la zone d'usinage s'opère par l'intermédiaire dudit support (200) de ladite pièce, doué de mobilité linéaire.
